# EUROPÄISCHE PATENTSCHRIFT

(11) **EP 1 674 697 B1**
(45) Veröffentlichungstag und Bekanntmachung des Hinweises auf die Patenterteilung: **27.02.2008**
(21) Anmeldenummer: 05026728.5
(22) Anmeldetag: 07.12.2005
(51) Int. Cl.: F02D 19/02, F02M 21/06

(54) **Verbrennungsmotor mit einer Treibgasanlage und Verfahren zum Betreiben des Verbrennungsmotors**
Internal combustion engine and method of operation with gaseous fuel supply
Moteur de combustion interne et méthode d' opération avec du combustible gazéifié

(30) Priorität: 23.12.2004 DE 102004062262; 18.01.2005 DE 102005002379
(43) Veröffentlichungstag der Anmeldung: 28.06.2006
(73) Patentinhaber: STILL GMBH, 22113 Hamburg (DE)
(72) Erfinder: Mey, Jörn, 23879 Mölln (DE); Neuf, Otttmar, 21465 Reinbek (DE)
(74) Vertreter: Geirhos, Johann

(56) Entgegenhaltungen:
- FR-A- 2 533 630
- US-A- 4 489 700
- US-A- 5 136 986

## Beschreibung

Die Erfindung betrifft ein Verfahren zum Abschalten einer Antriebseinheit einer mobilen Arbeitsmaschine, insbesondere eines Flurförderzeugs, wobei die Antriebseinheit einen mit Treibgas betriebenen Verbrennungsmotor und eine Kraftstoffanlage umfasst, welche einen Treibgasspeicher, einen Verdampfer und ein zwischen dem Treibgasspeicher und dem Verdampfer angeordnetes Absperrventil aufweist. Ebenso betrifft die Erfindung eine Antriebseinheit einer mobilen Arbeitsmaschine, insbesondere eines Flurförderzeugs, wobei die Antriebseinheit einen mit Treibgas betriebenen Verbrennungsmotor, eine elektrische Steuereinheit und eine Kraftstoffanlage umfasst, welche einen Treibgasspeicher, einen Verdampfer und ein zwischen dem Treibgasspeicher und dem Verdampfer angeordnetes Absperrventil aufweist.

Mit Treibgas angetriebene Antriebseinheiten werden häufig in mobilen Arbeitsmaschinen, insbesondere in Flurförderzeugen wie z.B. Gabelstaplern eingesetzt. Das für diese Anwendung gebräuchliche Treibgas wird häufig auch als Flüssiggas oder als LPG (liquid petroleum gas) bezeichnet und besteht in der Hauptsache aus Propan und/oder Butan. Die Kraftstoffanlage eines solchen Verbrennungsmotors umfasst einen als Druckgasflasche oder als Drucktank ausgeführten Kraftstoffbehälter, einen Verdampfer und ein dem Verdampfer vorgeschaltetes Absperrventil. In dem Verdampfer wird das in flüssigem Zustand gespeicherte Treibgas in einen gasförmigen Zustand entspannt, wobei dem Treibgas Wärmeenergie zugeführt wird. Der Verdampfer dient gleichzeitig als Druckregler für den Treibgasdruck hinter dem Verdampfer. Ein weiterer, dem Verdampfer nachgeschalteter Bestandteil der Kraftstoffanlage ist entweder ein Mischer, der bezüglich seiner Funktion einem Vergaser eines Benzinmotors entspricht, oder eine Einspritzanlage.

Die elektrische Steuereinheit kann als gemeinsame Steuereinheit für den Verbrennungsmotor und die Kraftstoffanlage ausgeführt sein. Ebenso kann die elektrische Steuereinheit zwei- oder mehrteilig ausgeführt sein, wobei beispielsweise der erste Teil der Steuereinheit ausschließlich zur Steuerung des Verbrennungsmotors dient und der zweite Teil der Steuereinheit zur Steuerung der Kraftstoffanlage und gegebenenfalls weiterer Komponenten dient.

Bei Treibgas-Antriebseinheiten des Standes der Technik ist es üblich wie z.B., im FR-2 533 630, dass zum Abschalten der Antriebseinheit das Absperrventil geschlossen wird, woraufhin der Verbrennungsmotor infolge Kraftstoffmangels zum Stehen kommt. Dieses übliche Verfahren zum Abschalten der Antriebseinheit hat den Vorteil, dass das Treibgas, das sich in dem hinter dem Absperrventil angeordneten Teil der Kraftstoffanlage befindet, weitgehend im Verbrennungsmotor verbrannt wird und sich die Antriebseinheit damit nach dem Abschalten immer in einem sicheren Zustand befindet.

Moderne Verbrennungsmotoren besitzen jedoch Steuereinheiten, die einen Kraftstoffmangel des Verbrennungsmotors - unabhängig von dessen Ursache - als Fehler werten, woraufhin automatisch ein Eintrag in einen Fehlerspeicher der Steuereinheit erfolgt.

Der Erfindung liegt daher die Aufgabe zugrunde, eine Antriebseinheit und ein Verfahren zum Abschalten der Antriebseinheit zur Verfügung zu stellen, die einen sicheren Zustand der abgeschalteten Antriebseinheit sicherstellen und die beim Abschalten der Antriebseinheit einen Eintrag in den Fehlerspeicher der Steuereinheit vermeiden.

Diese Aufgabe wird bezüglich des Verfahrens erfindungsgemäß dadurch gelöst, dass zum Abschalten der Antriebseinheit zunächst das Absperrventil geschlossen wird und anschließend, wenn das zwischen dem Absperrventil und dem Verdampfer vorhandene Treibgas zumindest teilweise gasförmig ist, der Verbrennungsmotor abgeschaltet wird. Zum Abschalten der Antriebseinheit wird also als erstes das Absperrventil geschlossen, was ein Nachströmen von Treibgas von dem Treibgasspeicher in den Verdampfer verhindert. Der Verbrennungsmotor läuft dann zunächst weiter und verbrennt dabei einen großen Teil des in der Kraftstoffanlage hinter dem Absperrventil.vorhandenen Treibgases. Sobald das in diesem Bereich der Kraftstoffanlage vorhandene Treibgas teilweise in gasförmigen Zustand übergegangen ist, wird der Verbrennungsmotor gezielt abgeschaltet. Im Unterschied zum Stand der Technik stirbt der Verbrennungsmotor dabei nicht infolge Kraftstoffmangels ab. Es erfolgt damit kein Eintrag in den Fehlerspeicher der Antriebseinheit oder des Verbrennungsmotors. Die zum Zeitpunkt des gezielten Abschaltens des Verbrennungsmotors in der Kraftstoffanlage vorhandene Treibgasmenge und insbesondere der Druck des Treibgases in der Kraftstollanlage sind jedoch so gering, dass kein Gefährdungspotential besteht.

Die Sicherheit der Kraftstoffanlage kann weiter verbessert werden, wenn der Verbrennungsmotor erst dann abgestellt wird, wenn das zwischen dem Absperrventil und dem Verdampfer vorhandene Treibgas zumindest annähernd vollständig gasförmig ist. Die in der Kraftstoffanlage befindliche Restgasmenge ist noch geringer, wenn der Verbrennungsmotor erst zu diesem Zeitpunkt ausgeschaltet wird.

Vorzugsweise erfolgt das Abschalten des Verbrennungsmotors durch eine elektrische Steuereinheit, beispielsweise indem die Zündanlage des Verbrennungsmotors abgeschaltet wird.

Mit besonderem Vorteil wird der Zeitpunkt, zu dem der Verbrennungsmotor abgeschaltet wird, mittels eines zwischen dem Absperrventil und dem Verdampfer angeordneten Drucksensors ermittelt. Der Drucksensor kann als einfacher Druckschalter oder als stufenlos arbeitender Sensor ausgeführt sein. Durch die Druckmessung hinter dem Absperrventil wird der Zeitpunkt ermittelt, zu dem sich hinter dem Absperrventil kein flüssiges Treibgas mehr befindet.

Die Genauigkeit kann verbessert werden, wenn der Zeitpunkt, zu dem der Verbrennungsmotor abgeschaltet wird, mittels eines zwischen dem Absperrventil und dem Verdampfer angeordneten Temperatursensors ermittelt wird. Hierbei wird zur Bestimmung des Zeitpunkts der ermittelte Druckwert mit dem ermittelten Temperaturwert verknüpft.

Besonders einfach ist es, wenn der Zeitpunkt, zu dem der Verbrennungsmotor abgeschaltet wird, mittels einer Zeitschaltung ermittelt wird. Ebenso ist es möglich, die Zeitschaltung mit der Ermittlung des Zeitpunkts nach dem Druck und gegebenenfalls der Temperatur zu kombinieren, beispielsweise indem eine minimale oder eine maximale Nachlaufzeit des Verbrennungsmotors nach dem Schließen des Absperrventils definiert wird.

Beispielsweise kann der Verbrennungsmotor nach Ablauf einer voreingestellten Zeitspanne nach dem Schließen des Absperrventils abgeschaltet werden. Die voreingestellte Zeitspanne kann auf die typischerweise hinter dem Absperrventil vorhandene Treibgasmenge und den typischen Leerlaufverbrauch des Verbrennungsmotors abgestimmt sein.

Bezüglich der Antriebseinheit wird die genannte Aufgabe erfindungsgemäß dadurch gelöst, dass die elektrische Steuereinheit derart ausgeführt ist, dass zum Abschalten der Antriebseinheit zunächst das Absperrventil geschlossen wird und anschließend, wenn das zwischen dem Absperrventil und dem Verdampfer vorhandene Treibgas zumindest teilweise gasförmig ist, der Verbrennungsmotor abgeschaltet wird.

Die Ansteuerung des vorzugsweise magnetisch ansteuerbaren Absperrventils sowie das gezielte Abschalten des Verbrennungsmotors erfolgt dabei durch die elektrische Steuereinheit. Eingangsseitig ist die Steuereinheit mit einem Bedienelement zum Ausschalten der Antriebseinheit, sowie dem Drucksensor und gegebenenfalls dem Temperatursensor verbunden. Die Zeitschaltung kann in der Steuereinheit implementiert sein.

Weitere Vorteile und Einzelheiten der Erfindung werden anhand des in der schematischen Figur dargestellten Ausführungsbeispiels näher erläutert.

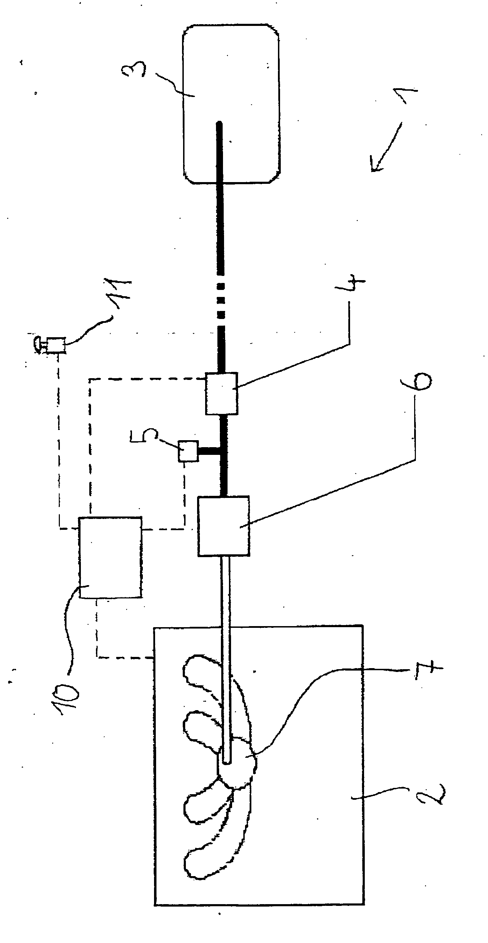

Die Figur zeigt eine erfindungsgemäße Antriebeinheit, bestehend aus einer Kraftstoffanlage 1, einem Verbrennungsmotor 2 und einer elektrischen Steuereinheit 10. Die wesentlichen Bestandteile der Kraftstoffanlage 1 sind ein Treibgasspeicher 3, ein elektrisch ansteuerbares Absperrventil 4, ein Drucksensor 5, ein Verdampfer 6 sowie ein Mischer 7 mit Kraftstoffsammelleitung.

Die elektrische Steuereinheit 10 ist eingangsseitig mit einem Bedienelement 11 zum Ausschalten des Verbrennungsmotors und mit dem Drucksensor 5 verbunden. Ausgangsseitig steuert die Steuereinheit 10 das Absperrventil 4 und den Verbrennungsmotor 1, insbesondere dessen Zündanlage an.

Wenn eine Bedienperson mittels des Bedienelements 11 ein Signal zum Ausschalten der Antriebseinheit erzeugt, schließt die Steuereinheit 10 zunächst das Absperrventil 4.

Dadurch wird ein Nachströmen von Treibgas von dem Treibgasspeicher 3 zum Verdampfer 6 verhindert. Der Verbrennungsmotor 2 läuft dabei zunächst unverändert weiter und verbraucht dabei einen großen Teil des in der Kraftstoffanlage hinter dem Absperrventil 4 vorhandenen Treibgases. Mittels des Drucksensors 5 wird der Zustand des Treibgases in der Leitung zwischen dem Absperrventil 4 und dem Verdampfer 6 ermittelt. Während des normalen Betriebs ist das Treibgas in diesem Bereich flüssig. Infolge des Verbrauchs von Treibgas durch den Verbrennungsmotor 2 sinkt bei geschlossenem Absperrventil 4 der Druck in diesem Bereich jedoch so weit ab, dass auch das direkt hinter dem Absperrventil 4 vorhandene Treibgas zu verdampfen beginnt. Mittels des Drucksensors 5 wird der Zeitpunkt, zu dem das Treibgas hinter dem Absperrventil zumindest teilweise von der flüssigen in die gasförmige Phase übergegangen ist, ermittelt. Die Steuereinheit schaltet daraufhin den Verbrennungsmotor 2 ab, beispielsweise indem die Zündanlage abgeschaltet wird.

Hierdurch wird erreicht, dass in der Kraftstoffanlage stets eine geringe Restmenge an Treibgas vorhanden ist, die so bemessen ist, dass die entsprechenden Sensoren des Verbrennungsmotors keinen Kraftstoffmangel erkennen, und sich die Kraftstoffanlage dennoch in einem sicheren Zustand befindet.

## Patentansprüche

1. Verfahren zum Abschalten einer Antriebseinheit einer mobilen Arbeitsmaschine, insbesondere eines Flurförderzeugs, wobei die Antriebseinheit einen mit Treibgas betriebenen Verbrennungsmotor (2) und eine Kraftstoffanlage (1) umfasst, welche einen Treibgasspeicher (3), einen Verdampfer (6) und ein zwischen dem Treibgasspeicher (3) und dem Verdampfer (6) angeordnetes Absperrventil (4) aufweist, **dadurch gekennzeichnet, dass** zum Abschalten der Antriebseinheit zunächst das Absperrventil (4) geschlossen wird und anschließend, wenn das zwischen dem Absperrventil (4) und dem Verdampfer (6) vorhandene Treibgas zumindest teilweise gasförmig ist, der Verbrennungsmotor (2) abgeschaltet wird.

2. Verfahren nach Anspurch 1, **dadurch gekennzeichnet, dass** der Verbrennungsmotor (2) abgeschaltet wird, wenn das zwischen dem Absperrventil (4) und dem Verdampfer (6) vorhandene Treibgas im Wesentlichen vollständig gasförmig ist.

3. Verfahren nach Anspruch 1 oder 2, **dadurch gekennzeichnet, dass** das Abschalten des Verbrennungsmotors (2) durch eine elektrische Steuereinheit (10) erfolgt, beispielsweise indem die Zündanlage des Verbrennungsmotors (2) abgeschaltet wird.

4. Verfahren nach einem der Ansprüche 1 bis 3, **dadurch gekennzeichnet, dass** der Zeitpunkt, zu dem der Verbrennungsmotor (2) abgeschaltet wird, mittels eines zwischen dem Absperrventil (4) und dem Verdampfer (6) angeordneten Drucksensors ermittelt wird.

5. Verfahren nach einem der Ansprüche 1 bis 4, **dadurch gekennzeichnet, dass** der Zeitpunkt, zu dem der Verbrennungsmotor (2) abgeschaltet wird, mittels eines zwischen dem Absperrventil (4) und dem Verdampfer (6) angeordneten Temperatursensors ermittelt wird.

6. Verfahren nach einem der Ansprüche 1 bis 5, **dadurch gekennzeichnet, dass** der Zeitpunkt, zu dem der Verbrennungsmotor (2) abgeschaltet wird, mittels einer Zeitschaltung ermittelt wird.

7. Verfahren nach Anspruch 6, **dadurch gekennzeichnet, dass** der Verbrennungsmotor (2) nach Ablauf einer voreingestellten Zeitspanne nach dem Schließen des Absperrventils abgeschaltet wird.

8. Antriebseinheit einer mobilen Arbeitsmaschine, insbesondere eines Flurförderzeugs, wobei die Antriebseinheit einen mit Treibgas betriebenen Verbrennungsmotor (2), eine elektrische Steuereinheit (10) und eine Kraftstoffanlage (1) umfasst, welche einen Treibgasspeicher (3), einen Verdampfer (6) und ein zwischen dem Treibgasspeicher (3) und dem Verdampfer (6) angeordnetes Absperrventil (4) aufweist, **dadurch gekennzeichnet, dass** die elektrische Steuereinheit (10) derart ausgeführt ist, dass zum Abschalten der Antriebseinheit zunächst das Absperrventil (4) geschlossen wird und anschließend, wenn das zwischen dem Absperrventil (4) und dem Verdampfer (6) vorhandene Treibgas zumindest teilweise gasförmig ist, der Verbrennungsmotor (2) abgeschaltet wird.

9. Antriebseinheit nach Anspruch 8, **dadurch gekennzeichnet, dass** der Verbrennungsmotor (2) abgeschaltet wird, wenn das zwischen dem Absperrventil (4) und dem Verdampfer (6) vorhandene Treibgas im Wesentlichen vollständig gasförmig ist.

10. Antriebseinheit nach Anspruch 8 oder 9, **dadurch gekennzeichnet, dass** das Abschalten des Verbrennungsmotors (2) durch eine elektrische Steuereinheit (10) erfolgt, beispielsweise indem eine Zündanlage des Verbrennungsmotors (2) abgeschaltet wird.

11. Antriebseinheit nach einem der Ansprüche 8 bis 10, **dadurch gekennzeichnet, dass** die elektrische Steuereinheit (10) derart ausgeführt ist, dass der Zeitpunkt, zu dem der Verbrennungsmotor (2) abgeschaltet wird, mittels eines zwischen dem Absperrventil (4) und dem Verdampfer (6) angeordneten Drucksensors ermittelt wird.

12. Antriebseinheit nach einem der Ansprüche 8 bis 11, **dadurch gekennzeichnet, dass** die elektrische Steuereinheit (10) derart ausgeführt ist, dass der Zeitpunkt, zu dem der Verbrennungsmotor (2) abgeschaltet wird, mittels eines zwischen dem Absperrventil (4) und dem Verdampfer (6) angeordneten Temperatursensors ermittelt wird.

13. Antriebseinheit nach einem der Ansprüche 8 bis 12, **dadurch gekennzeichnet, dass** die elektrische Steuereinheit (10) derart ausgeführt ist, dass der Zeitpunkt, zu dem der Verbrennungsmotor (2) abgeschaltet wird, mittels einer Zeitschaltung ermittelt wird.

14. Antriebseinheit nach Anspruch 13, **dadurch gekennzeichnet, dass** die elektrische Steuereinheit (10) derart ausgeführt ist, dass der Verbrennungsmotor (2) nach Ablauf einer voreingestellten Zeitspanne nach dem Schließen des Absperrventils abgeschaltet wird.

## Claims

1. Method for switching off a drive unit of a mobile working machine, in particular an industrial truck, wherein the drive unit comprises a combustion engine (2) driven by propellant and a fuel system (1), which has a propellant store (3), a vaporiser (6) and a stop valve (4) arranged between the propellant store (3) and the vaporiser (6), **characterised in that** to switch off the drive unit, the top valve (4) is firstly closed and then, when the propellant present between the stop valve (4) and the vaporiser (6) is at least partially gaseous, the combustion engine (2) is switched off.

2. Method according to claim 1, **characterised in that** the combustion engine (2) is switched off when the propellant present between the stop valve (4) and the vaporiser (6) is substantially completely gaseous.

3. Method according to claim 1 or 2, **characterised in that** the combustion engine (2) is switched off by an electric control unit (10), for example **in that** the ignition system of the combustion engine (2) is switched off.

4. Method according to any one of claims 1 to 3, **characterised in that** the time at which the combustion engine (2) is switched off, is determined by means of a pressure sensor arranged between the stop valve (4) and the vaporiser (6).

5. Method according to any one of claims 1 to 4, **characterised in that** the time at which the combustion engine (2) is switched off is determined by means of a temperature sensor arranged between the stop valve (4) and the vaporiser (6).

6. Method according to any one of claims 1 to 5, **characterised in that** the time at which the combustion engine (2) is switched off is determined by means of a time circuit.

7. Method according to claim 6, **characterised in that** the combustion engine (2) is switched off after the expiry of a preset time span after the closure of the stop valve.

8. Drive unit of a mobile working machine, in particular an industrial truck, wherein the drive unit comprises a combustion engine (2) driven by propellant, an electric control unit (10) and a fuel system (1), which has a propellant store (3), a vaporiser (6) and a stop valve (4) arranged between the propellant store (3) and the vaporiser (6), **characterised in that** the electric control unit (10) is designed such that, to switch off the drive unit, the stop valve (4) is firstly closed and then when the propellant present between the stop valve (4) and the vaporiser (6) is at least partially gaseous, the combustion engine (2) is switched off.

9. Drive unit according to claim 8, **characterised in that** the combustion engine (2) is switched off when the propellant present between the stop valve (4) and the vaporiser (6) is substantially completely gaseous.

10. Drive unit according to claim 8 or 9, **characterised in that** the combustion engine (2) is switched off by an electric control unit (10), for example **in that** an ignition system of the combustion engine (2) is switched off.

11. Drive unit according to any one of claims 8 to 10, **characterised in that** the electric control unit (10) is designed in such a way that the time at which the combustion engine (2) is switched off is determined by means of a pressure sensor arranged between the stop valve (4) and the vaporiser (6).

12. Drive unit according to any one of claims 8 to 11, **characterised in that** the electric control unit (10) is designed in such a way that the time at which the combustion engine (2) is switched off is determined by means of a temperature sensor arranged between the stop valve (4) and the vaporiser (6).

13. Drive unit according to any one of claims 8 to 12, **characterised in that** the electric control unit (10) is designed in such a way that the time at which the combustion engine (2) is switched off is determined by means of a time circuit.

14. Drive unit according to claim 13, **characterised in that** the electric control unit (10) is designed in such a way that the combustion engine (2) is switched off after expiry of a preset time span after the closure of the stop valve.

## Revendications

1. Procédé pour couper une unité d'entraînement d'une machine de travail mobile, notamment d'un chariot transporteur, selon lequel l'unité d'entraînement comporte un moteur à combustion interne (2) utilisant un gaz propulseur et une installation de carburant (1) ayant un réservoir de gaz de propulsion (3), un évaporateur (6) et une vanne d'arrêt (4) installée entre le réservoir de gaz propulseur (3) et l'évaporateur (6),
**caractérisé en ce que**
pour couper l'unité d'entraînement on ferme tout d'abord la vanne d'arrêt (4) et ensuite, si le gaz propulseur se trouvant entre la vanne d'arrêt (4) et l'évaporateur (6) est au moins en partie à l'état gazeux, on coupe le moteur à combustion interne (2).

2. Procédé selon la revendication 1,
**caractérisé en ce qu'**
on coupe le moteur à combustion interne (2) si le gaz propulseur entre la vanne d'arrêt (4) et l'évaporateur (6) est pratiquement totalement à l'état gazeux.

3. Procédé selon la revendication 1 ou 2,
**caractérisé en ce qu'**
on coupe le moteur à combustion interne (2) par une unité de commande électrique (10), par exemple en coupant l'installation d'allumage du moteur à combustion interne (2).

4. Procédé selon l'une des revendications 1 à 3,
**caractérisé en ce qu'**
à l'aide d'un capteur de pression installé entre la vanne d'arrêt (4) et l'évaporateur (6), on détermine l'instant auquel on coupe le moteur à combustion interne (2).

5. Procédé selon l'une des revendications 1 à 4,
**caractérisé en ce qu'**
on détermine l'instant auquel on coupe le moteur à combustion (2) à l'aide d'un capteur de température installé entre la vanne d'arrêt (4) et l'évaporateur 6.

6. Procédé selon l'une des revendications 1 à 5,
**caractérisé en ce qu'**
on détermine l'instant auquel on coupe le moteur à combustion interne (2) à l'aide d'un circuit d'horloge.

7. Procédé selon la revendication 6,
**caractérisé en ce qu'**
à la fin d'une période préréglée, après la fermeture de la vanne d'arrêt, on coupe le moteur à combustion interne (2).

8. Unité d'entraînement d'une machine de travail mobile, notamment d'un chariot transporteur dont l'unité d'entraînement comporte un moteur à combustion interne (2) utilisant un gaz propulseur, une unité de commande électrique (10) et une installation de carburant (1) ayant un réservoir à gaz propulseur (3), un évaporateur (6) et une vanne d'arrêt (4) entre le réservoir de gaz propulseur (3) et l'évaporateur (6),
**caractérisée en ce que**
l'unité de commande électrique (10) est réalisée pour fermer tout d'abord la vanne d'arrêt (4) pour couper l'unité d'entraînement et ensuite, si le gaz propulseur se trouvant entre la vanne d'arrêt (4) et l'évaporateur (6) est au moins en partie à l'état gazeux, on coupe le moteur à combustion interne (2).

9. Unité d'entraînement selon la revendication 8,
**caractérisée en ce qu'**
on coupe le moteur à combustion interne (2) si le gaz propulseur se trouvant entre la vanne d'arrêt (4) et l'évaporateur (6) est pratiquement totalement à l'état gazeux.

10. Unité d'entraînement selon la revendication 8 ou 9,
**caractérisée en ce qu'**
on coupe le moteur à combustion interne (2) par une unité de commande électrique (10), par exemple en coupant l'installation d'allumage du moteur à combustion interne (2).

11. Unité d'entraînement selon l'une des revendications 8 à 10,
**caractérisée en ce que**
l'unité de commande électrique (10) est réalisée de façon que l'instant auquel on coupe le moteur à combustion interne (2) soit déterminé à l'aide d'un capteur de pression installé entre la vanne d'arrêt (4) et l'évaporateur (6).

12. Unité d'entraînement selon l'une des revendications 8 à 11,
**caractérisée en ce que**
l'unité de commande électrique (10) est réalisée de façon que l'instant auquel on coupe le moteur à combustion interne (2) se détermine à l'aide d'un capteur de température installé entre la vanne d'arrêt (4) et l'évaporateur (6).

13. Unité d'entraînement selon l'une des revendications 8 à 12,
**caractérisée en ce que**
l'unité de commande électrique (10) est réalisée pour déterminer à l'aide d'un circuit d'horloge l'instant auquel on coupe le moteur à combustion interne (2).

14. Unité d'entraînement selon la revendication 13,
**caractérisée en ce que**
l'unité de commande électrique (10) est réalisée pour couper le moteur à combustion interne (2) à la fin d'une période préréglée après la fermeture de la vanne d'arrêt.
